# EUROPÄISCHE PATENTSCHRIFT

(11) **EP 1 089 813 B1**
(45) Veröffentlichungstag und Bekanntmachung des Hinweises auf die Patenterteilung: **05.12.2001**
(21) Anmeldenummer: 99932633.3
(22) Anmeldetag: 05.05.1999
(51) Int. Cl.: B01J 19/00, B01J 37/02

(54) **REAKTORANORDNUNG UND VERFAHREN ZU DEREN HERSTELLUNG**
REACTOR SYSTEM AND CORRESPONDING PRODUCTION METHOD
SYSTEME DE REACTEUR ET PROCEDE PERMETTANT DE LE PRODUIRE

(30) Priorität: 22.05.1998 DE 19823036
(43) Veröffentlichungstag der Anmeldung: 11.04.2001
(73) Patentinhaber: Infineon Technologies AG, 81669 München (DE)
(72) Erfinder: LEHMANN, Volker, D-80689 München (DE); OTTOW, Stefan, D-01109 Dresden (DE); STENGL, Reinhard, D-86391 Stadtbergen (DE); REISINGER, Hans, D-82031 Grünwald (DE); WENDT, Hermann, D-85630 Grasbrunn (DE)
(74) Vertreter: Kindermann, Peter, Dipl.-Ing.
(86) Internationale Anmeldenummer: DE9901357
(87) Internationale Veröffentlichungsnummer: WO9961147

(56) Entgegenhaltungen:
- EP-A- 0 281 364
- WO-A-96/30934
- DE-A- 3 915 920
- CHOPEY N P, ONDREY G, PARKINSON G: "Microreactors find new niches" CHEMICAL ENGINEERING,März 1997 (1997-03), Seiten 30-33, XP000197691

## Beschreibung

Die Erfindung betrifft eine Reaktoranordnung zur Durchführung katalytischer, chemischer Reaktionen sowie ein Verfahren zu deren Herstellung.

Viele chemische Reaktionen, die in der chemischen Industrie großtechnisch eingesetzt werden, sind katalytischer Natur. Zur Durchführung derartiger Prozesse werden zunehmend Reaktoranordnungen, die mikromechanisch hergestellt werden, eingesetzt. Für derartige Reaktoranordnungen hat sich der Name Mikroreaktor eingebürgert. Sie umfassen einen porösen Körper, auf dessen Oberfläche der Katalysator vorliegt.

In G. Wießmeier et al, Micromech. Eng. 1996, Seiten 285 bis 289, ist ein Mikroreaktor vorgeschlagen worden, der mikromechanisch aufgebaut wird. Dazu wird auf einer Aluminiumplatte ein S.tapel aus mikrostrukturierten Aluminiumfolien gebildet, der durch anodische Oxidation in Al₂O₃ umgewandelt wird. Die Oberfläche der strukturierten Folien wird mit einem Katalysator versehen. Die Aluminiumplatte ist nicht porös. In dieser Anordnung ist die Katalysatortemperatur durch den Schmelzpunkt von Aluminium bei 500°C nach oben hin begrenzt. Die Reaktionsteilnehmer gelangen durch Diffusion in die Poren.

Der Erfindung liegt daher das Problem zugrunde, eine Reaktoranordnung und ein Verfahren zu deren Herstellung anzugeben, in der höhere Katalysatortemperaturen zulässig sind.

Dieses Problem wird erfindungsgemäß gelöst durch eine Reaktoranordnung gemäß Anspruch 1 sowie ein Verfahren zu deren Herstellung gemäß Anspruch 7. Weitere Ausgestaltungen der Erfindung gehen aus den übrigen Ansprüchen hervor.

Die Reaktoranordnung umfaßt ein Gehäuse, das mit einer Siliziumscheibe verbunden ist. Die Siliziumscheibe ist monolithisch mit Gehäuseteilen verbunden, so daß Teile der Siliziumscheibe Teile des Gehäuses bilden.

Die Siliziumscheibe weist Poren auf, die sich von einer Hauptfläche der Siliziumscheibe in das Innere der Siliziumscheibe erstrecken. Es ist eine Katalysatorschicht vorgesehen, die die Oberfläche der Poren mindestens teilweise bedeckt. Als Katalysatorträger fungiert in der Reaktoranordnung die Siliziumscheibe. Aufgrund des Schmelzpunktes von Silizium von 1415°C sind daher in dieser Reaktoranordnung erheblich höhere Katalysatortemperaturen zulässig. In dem Gehäuse ist oberhalb der ersten Hauptfläche mindestens eine Zuführung vorgesehen, über die Reaktionsteilnehmer den Poren zu- bzw. abführbar sind.

Die Poren weisen vorzugsweise einen Durchmesser im Bereich zwischen 1 µm und 10 µm auf. Die Tiefe der Poren beträgt 50 µm bis 500 µm.

Die Poren können sowohl durch anisotropes Trockenätzen als auch durch elektrochemisches Ätzen erzeugt werden.

Zur weiteren Vergrößerung der Oberfläche der Poren ist es vorteilhaft, die Seitenwände der Poren mit Seitenporen zu versehen, deren Durchmesser mindestens um einen Faktor 10 geringer als der Durchmesser der Poren ist. Eine derartig poröse Siliziumscheibe läßt sich vorteilhaft durch elektrochemisches Ätzen herstellen.

Vorzugsweise verlaufen die Poren in der Siliziumscheibe von der ersten Hauptfläche zu einer gegenüberliegenden zweiten Hauptfläche der Siliziumscheibe. In diesem Fall können Reaktionsteilnehmer durch Druck oder Pumpen durch die Siliziumscheibe hindurch geleitet werden. Dadurch lassen sich definierte Reaktionszeiten einstellen.

Zur kontrollierten Reaktion zwischen zwei verschiedenen Reaktionsteilnehmern ist es vorteilhaft, in der Siliziumscheibe einen Reaktionsraum vorzusehen, von dem aus Poren zu der ersten Hauptfläche und zu der zweiten Hauptfläche verlaufen. Ein derartiger mit Poren verbundener Reaktionsraum läßt sich durch elektrochemisches Ätzen durch Variation der Ätzparameter herstellen.

Weist die Siliziumscheibe von der ersten Hauptfläche zur zweiten Hauptfläche verlaufende Poren auf, so ist es vorteilhaft, in dem Gehäuse der zweiten Hauptfläche benachbart eine zweite Zuführung vorzusehen, über die Reaktionsteilnehmer zu- oder abgeführt werden können. Alternativ kann die zweite Hauptfläche an ein Gefäß angeflanscht werden, aus dem bzw. in das die Reaktionsteilnehmer zu- bzw. abgefüllt werden.

Zur kontrollierten Durchführung von Reaktionen unterschiedlicher Reaktionsteilnehmer ist es vorteilhaft, in dem Gehäuse der ersten Hauptfläche benachbart neben der ersten Zuführung eine dritte Zuführung vorzusehen.

Zur Durchführung von Reaktionen mit aggressiver Katalysatorschicht und/oder aggressiven Reaktionsprodukten und/oder Reaktionsteilnehmern, ist es vorteilhaft, auf der Oberfläche der Poren zwischen der Oberfläche der Poren und der Katalysatorschicht eine inerte Schicht, insbesondere aus Siliziumnitrid, Siliziumoxid, Bornitrid oder Metallsilizid vorzusehen.

Als Katalysatorschicht ist unter anderem einer der Stoffe Platin, Palladium, Gold, Rhodium geeignet.

Die Reaktoranordnung ist unter anderem zur Analyse von DNA geeignet. Weitere vorteilhafte Anwendungen der Reaktoranordnung sind alle katalytischen Reaktionen.

Vorzugsweise werden die Poren durch elektrochemisches Ätzen in einem fluoridhaltigen sauren Elektrolyten, gegen den die Siliziumscheibe als Anode verschaltet ist, erzeugt. Da die Siliziumscheibe bei der elektrochemischen Ätzung als Anode verschaltet ist, bewegen sich Minoritätsladungsträger im Silizium zu der mit dem Elektrolyten in Kontakt stehenden ersten Hauptfläche. An der ersten Hauptfläche bildet sich eine Raumladungszone aus. Da die Feldstärke im Bereich von Vertiefungen in der Oberfläche größer ist als außerhalb davon, bewegen sich die Minoritätsladungsträger bevorzugt zu diesen Punkten. Dadurch kommt es zu einer Strukturierung der Oberfläche. Je tiefer eine anfänglich kleine Unebenheit, die durch eine vorhergehende Ätzung gezielt in die erste Hauptfläche eingebracht werden kann, durch die Ätzung wird, desto mehr Minoritätsladungsträger bewegen sich wegen der vergrößerten Feldstärke dorthin und desto stärker ist der Ätzangriff an dieser Stelle.

Der Ätzangriff ist abhängig von der Stromdichte in der Siliziumscheibe und von der Fluoridkonzentration im Elektrolyten. Durch Erhöhung der Stromdichte im Elektrolyten oder durch Verminderung der Fluoridkonzentration im Elektrolyten wird der Porendurchmesser vergrößert. Auf diese Weise kann im Innern der Substratscheibe ein Reaktionsraum gebildet werden, dessen Durchmesser größer ist als derjenige der Poren im Bereich der ersten Hauptfläche. Insbesondere wird dadurch eine Verbindung zwischen den einzelnen Poren erzeugt. Ferner können durch Verringerung der Stromdichte und Erhöhung des Potentials am Ende einer elektrochemischen Ätzung in den Seitenwänden der Poren Seitenporen mit einem geringeren Durchmesser als dem der Poren gebildet werden. Da der Durchmesseer von Poren von der Dotierung abhängt, lassen sich feine Seitenporen auch durch Erhöhung der n-Dotierung (zum Beispiel durch Ausdiffusion aus PSG) und einen zweiten elektrochemischen Ätzvorgang erzeugen.

Im folgenden wird die Erfindung anhand von Ausführungsbeispielen, die in den Figuren dargestellt sind, näher erläutert.
- Figur 1: zeigt einen Schnitt durch eine Reaktoranordnung mit einer Siliziumscheibe mit durchgehenden Poren.
- Figur 2: zeigt einen Schnitt durch eine Siliziumscheibe mit Poren, die von einer ersten Hauptfläche in die Siliziumscheibe hineinreichen.
- Figur 3: zeigt einen Schnitt durch eine Siliziumscheibe mit Poren, die im Bereich der Seitenwände Seitenporen aufweisen.
- Figur 3a: zeigt ein Detail aus der Seitenwand der Poren der in Figur 3 dargestellten Siliziumscheibe.
- Figur 4: zeigt einen Schnitt durch eine Siliziumscheibe mit durchgehenden Poren.
- Figur 5: zeigt einen Schnitt einer Reaktoranordnung mit einer Siliziumscheibe, die einen Reaktionsraum, der über Poren mit einer ersten Hauptfläche und einer zweiten Hauptfläche verbunden ist, umfaßt.

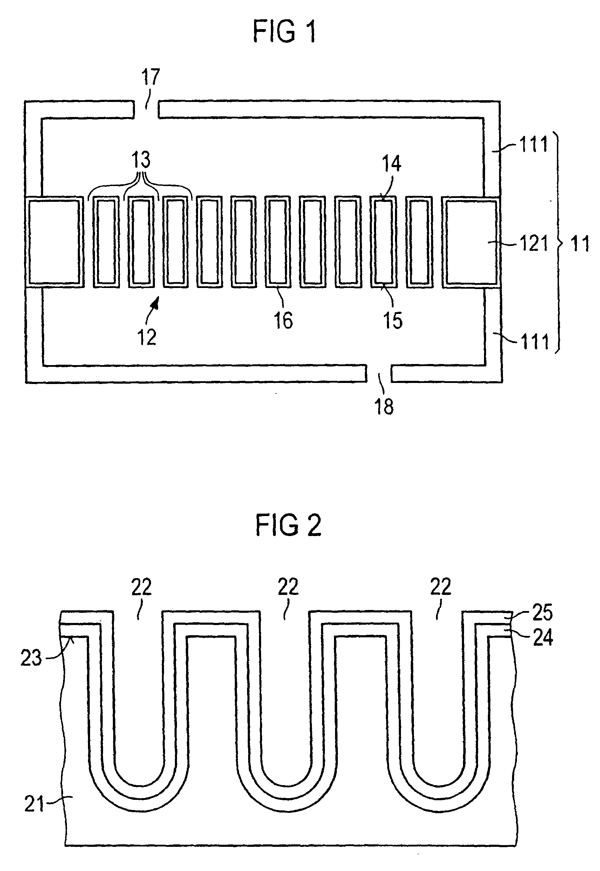

Eine Reaktoranordnung umfaßt ein Gehäuse 11, in dem eine Siliziumscheibe 12 angeordnet ist. Die Siliziumscheibe 12 weist im mittleren Bereich Poren 13 auf, die von einer ersten Hauptfläche 14 zu einer zweiten Hauptfläche 15 verlaufen (siehe Figur 1). Außerhalb des mittleren Bereichs weist die Siliziumscheibe 12 einen massiven Randbereich 121 auf. Die Oberfläche der Siliziumscheibe 12 ist mit einer Katalysatorschicht 16 aus Au, Pd, Pt, Rh mit einer Schichtdicke von 10 nm versehen.

Das Gehäuse 11 umfaßt zwei Gehäuseteile 111 aus zum Beispiel Glas, Si, SiO₂, Al₂O₃ oder ähnlichem, die an den Randbereich 121 angrenzen und mit dem Randbereich 121 dicht abschließen. Die beiden Gehäuseteile 111 und der Randbereich 121 bilden gemeinsam das Gehäuse 11.

Die Poren 13 weisen einen Durchmesser von 1 bis 10 µm auf. Die Dicke der Siliziumscheibe 12 parallel zum Verlauf der Poren 13 beträgt 500 µm.

Das Gehäuse 11 weist auf der der ersten Hauptfläche 14 benachbarten Seite in einem der Gehäuseteile 111 eine erste Zuführung 17 und auf der der zweiten Hauptfläche 15 benachbarten Seite in dem anderen Gehäuseteil 111 eine zweite Zuführung 18 auf.

Die Siliziumscheibe 12 ist so in dem Gehäuse 11 angeordnet, daß sie mit der Wand der Gehäuseteile 111 dicht abschließt. Reaktionsteilnehmer, die über die erste Zuführung 17 in den Raum, der der ersten Hauptfläche 14 benachbart ist, gelangen, können nur über die Poren 13 zu der zweiten Zuführung 18 gelangen. Im Betrieb werden die Reaktionsteilnehmer mit einem Druck von 0 bis 10 bar durch die erste Zuführung 17 gepumpt.

Zur Herstellung der Siliziumscheibe 12 wird die Siliziumscheibe aus n-dotiertem monokristallinem Silizium mit der ersten Hauptfläche mit einem fluoridhaltigen sauren Elektrolyten mit einer Flußsäurekonzentration von 3 Gewichtsprozent in Kontakt gebracht. Die Siliziumscheibe 12 wird als Anode verschaltet. Dazu wird zwischen die Siliziumscheibe 12 und den Elektrolyten eine Spannung von 3 Volt angelegt. Von der zweiten Hauptfläche 15 her wird die Siliziumscheibe 12 mit Licht beleuchtet, so daß sich eine Stromdichte von 10 mA/cm² einstellt. Ausgehend von Vertiefungen, die in der ersten Hauptfläche 14 durch eine maskierte, alkalische Ätzung gebildet werden, werden bei der elektrochemischen Ätzung die Poren 13 erzeugt. Nach etwa 10 Stunden Ätzzeit erreicht die Ätzung die zweite Hauptfläche 15, so daß die Poren durchgehend von der ersten Hauptfläche 14 zur zweiten Hauptfläche 15 verlaufen.

Die Katalysatorschicht 16 aus Au, Pd, Pt oder Rh wird durch CVD-Abscheidung aufgebracht.

In einem weiteren Ausführungsbeispiel weist eine Siliziumscheibe 21 Poren 22 auf, die ausgehend von einer ersten Hauptfläche 23 sich in die Tiefe der Siliziumscheibe 21 hinein erstrecken (siehe Figur 2). Die Poren 22 weisen einen Durchmesser von 10 µm und eine Tiefe von 500 µm auf.

Die Poren 22 werden analog wie anhand von Figur 1 erläutert durch elektrochemisches Ätzen erzeugt. Bis auf die Ätzzeit werden dieselben Ätzparameter wie in dem anhand von Figur 1 geschilderten Beispiel verwendet. Die Ätzzeit wird jedoch nach 8 Stunden beendet, so daß die Poren 22 in der Siliziumscheibe 21 enden.

Auf die Oberfläche der Poren 22 wird eine inerte Schicht 24 aus Siliziumnitrid in einer Dicke von 100 nm aufgebracht. Die inerte Schicht 24 wird in einem CVD-Verfahren abgeschieden. Auf die inerte Schicht 24 wird eine Katalysatorschicht 25 aus Platin oder Palladium in einer Dicke von 10 nm durch CVD-Abscheidung oder Aufdampfung aufgebracht.

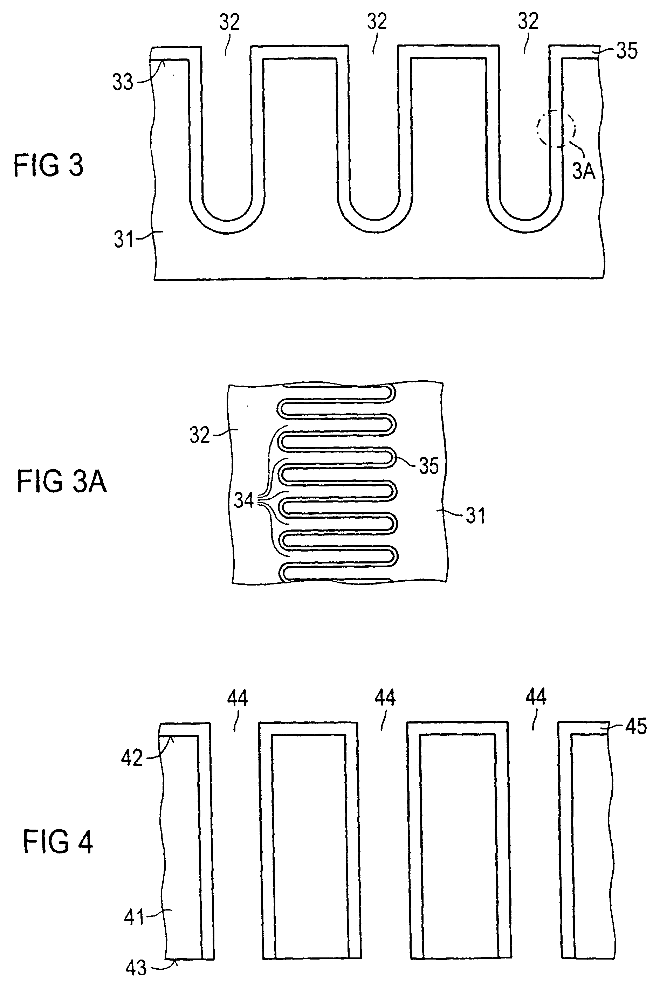

In einem weiteren Ausführungsbeispiel weist eine Siliziumscheibe 31 Poren 32 auf, die von einer ersten Hauptfläche 32 in die Siliziumscheibe 31 hineinreichen (siehe Figur 3). Die Seitenwände der Poren 32 weisen Seitenporen 34 auf, deren Durchmesser erheblich kleiner als der Durchmesser der Poren 32 ist (siehe Figur 3a, in der der in Figur 3 mit 3a bezeichnete Ausschnitt vergrößert dargestellt ist).

Zur Herstellung der Siliziumscheibe 31 wird die erste Hauptfläche 33 mit einem flußsäurehaitigen, sauren Elektrolyten mit einer Flußsäurekonzentration von 6 Gewichtsprozent in Kontakt gebracht. Die Siliziumscheibe 31 wird als Anode verschaltet und mit einem Potential von 2 Volt beaufschlagt. Die Siliziumscheibe 31 wird von der Rückseite her beleuchtet, so daß eine Stromdichte von 15 mA/cm² eingestellt wird. Ausgehend von Vertiefungen in der ersten Hauptfläche 33, die zuvor durch alkalische Ätzung unter Verwendung einer photolithographisch erzeugten Maske gebildet werden, schreitet die Ätzung in die Siliziumscheibe 31 hinein fort, wobei die Poren 32 gebildet werden. Nach einer Ätzzeit von 8 Stunden beträgt der Durchmesser der Poren 32 10 µm und die Tiefe 400 µm.

Anschließend wird das Potential, mit dem die Siliziumscheibe 31 verbunden ist, auf 10 Volt erhöht und die Beleuchtung ausgeschaltet. Die übrigen Parameter bleiben unverändert. Bei dieser erhöhten Spannung wird die elektrochemische Ätzung fortgesetzt. Es bilden sich in den Seitenwänden der Poren 32 Seitenporen 34, die einen Durchmesser von 100 nm aufweisen. Die Ätzung wird 3 Minuten fortgesetzt, so daß die Tiefe der Seitenporen 34 gemessen von der Seitenwand der Poren 32 5 µm beträgt.

Anschließend wird eine Katalysatorschicht 35 aus Au, Pt, Pd oder Rh durch CVD-Abscheidung aufgebracht. Die Katalysatorschicht 35 weist eine Dicke von 10 nm auf. Sie bedeckt die Oberfläche der Poren 32 und der Seitenporen 34 mit im wesentlichen konformer Kantenbedeckung.

In einem weiteren Ausführungsbeispiel weist eine Siliziumscheibe 41 von einer ersten Hauptfläche 42 zu einer zweiten Hauptfläche 43 verlaufende Poren 44 auf. Die Seitenwände der Poren 44 und die erste Hauptfläche 42 sind mit einer Katalysatorschicht 45 bedeckt. Die Katalysatorschicht 45 weist eine Dicke von 10 nm auf und enthält Au, Pt, Pd oder Rh. Die zweite Hauptfläche 43 der Siliziumscheibe 41 liegt dagegen frei (siehe Figur 4).

Die Herstellung der Siliziumscheibe 41 erfolgt analog wie in Zusammenhang mit Figur 2 erläutert. Zunächst werden die Poren 44 erzeugt, die von der ersten Hauptfläche 42 in die Tiefe der Siliziumscheibe 41 hineinreichen. Anschließend wird die Katalysatorschicht 45 aus Au, Pt, Pd oder Rh durch CVD-Abscheidung oder Bedampfen gebildet. Anschließend wird die Siliziumscheibe 41 durch Schleifen oder Ätzen von der zweiten Hauptfläche 43 her zurückgedünnt, so daß die in Figur 4 dargestellte siebartige Struktur entsteht.

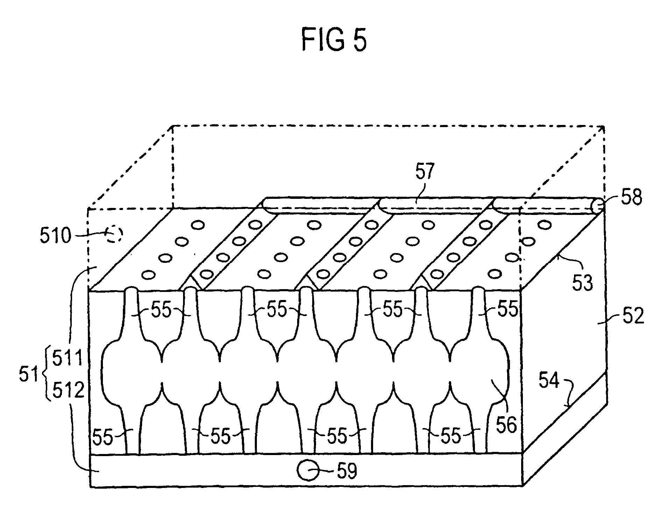

Ein Gehäuse 51 umfaßt ein erstes Gehäuseteil 511 und ein zweites Gehäuseteil 512, die jeweils dicht mit einer Siliziumscheibe 52 verbunden sind (siehe Figur 5). Dabei grenzt das erste Gehäuseteil 511 an eine erste Hauptfläche der Siliziumscheibe 52 und das zweite Gehäuseteil 512 an eine zweite Hauptfläche der Siliziumscheibe 52 an. Das erste Gehäuseteil 511 und das zweite Gehäuseteil 512 besteht zum Beispiel aus Si.

Die Siliziumscheibe 52 weist Poren 55 auf, die von der ersten Hauptfläche 53 bzw. der zweiten Hauptfläche 54 bis zu einem Reaktionsraum 56 im Inneren der Siliziumscheibe 52 reichen.

Entlang der ersten Hauptfläche 52 sind die Poren in parallel angeordneten Zeilen angeordnet. Jede zweite Zeile der Poren 55 ist über eine Rohrleitung 57 mit einer ersten Zuführung 58 verbunden. Die dazwischen angeordneten Zeilen der Poren 55 enden in einem Hohlraum, der durch das Gehäuseteil 511 oberhalb der ersten Hauptfläche 53 aufgespannt wird. Im Bereich der zweiten Hauptfläche 54 münden die Poren 55 alle in einen Hohlraum, der durch das zweite Gehäuseteil 512 der zweiten Hauptfläche 54 benachbart aufgespannt wird.

Das zweite Gehäuseteil 512 ist mit einer zweiten Zuführung 59 und das erste Gehäuseteil 511 mit einer dritten Zuführung 510 versehen.

Alternativ werden das erste Gehäuseteil 511 und das zweite Gehäuseteil 512 aus Silizium gebildet. Dabei werden in den Gehäuseteilen 511, 512 jeweils Rinnen vorgesehen, die einerseits mit der ersten Zuführung 58, der zweiten Zuführung 59 bzw. der dritten Zuführung 510 verbunden sind und die andererseits an die Poren 55, die mit der betreffenden Zuführung 58, 59, 510 verbunden sind, angrenzen. Vorzugsweise werden die Rinnen in dem ersten Gehäuseteil 511 kammartig ausgestaltet, wobei die mit der ersten Zuführung 58 verbundenen Rinnen in die mit der zweiten Zuführung 59 verbundenen Rinnen hineingreifen.

Im Betrieb der Reaktoranordnung wird über die erste Zuführung 58 eine erste Art Reaktionsteilnehmer und über die dritte Zuführung 510 eine zweite Art Reaktionsteilnehmer zugeführt. Diese gelangen über die Poren 55 in den Reaktionsraum 56, in dem sie reagieren. Reaktionsprodukte gelangen durch die Poren 55 vom Reaktionsraum 56 zur zweiten Hauptfläche 54 und von dort zur zweiten Zuführung 59.

Die Oberfläche der Poren 55 und des Reaktionsraum 56 ist mit einer Katalysatorschicht aus Au, Pt, Pd oder Rh in einer Schichtdicke von 10 nm versehen (nicht dargestellt).

Zur Herstellung der Siliziumscheibe 52 wird zunächst die erste Hauptfläche durch eine alkalische Ätzung mit Hilfe einer photolithographisch erzeugten Maske mit zeilenförmig angeordneten Vertiefungen versehen. Dann wird die erste Hauptfläche 53 mit einem flußsäurehaltigen sauren Elektrolyten mit einer Flußsäurekonzentration von 3 Gewichtsprozent in Kontakt gebracht. Die Siliziumscheibe 52 wird als Anode verschaltet und mit einem Potential von 3 Volt beaufschlagt. Von der zweiten Hauptfläche 54 her wird die Siliziumscheibe 52 beleuchtet, so daß eine Stromdichte von 10 mA/cm² eingestellt wird. Ausgehend von den zeilenförmig angeordneten Vertiefungen werden dabei die Poren 55 bis in eine erste Tiefe von 200 µm erzeugt. Die erste Tiefe wird nach einer Ätzzeit von 4 Stunden erreicht. Dann wird die Stromdichte durch Reduktion des Potentials an der Siliziumscheibe 52 auf 2 Volt und Beleuchtung von der zweiten Hauptfläche 54 her auf 30 mA/cm² erhöht. Die elektrochemische Ätzung wird fortgesetzt, wobei bedingt durch die geänderten Parameter der Querschnitt der Poren 55 wächst, bis benachbarte Poren 55 zusammenwachsen und den höhlenförmigen Reaktionsraum 56 bilden. Nach Erreichen einer zweiten Tiefe von 300 µm, entsprechend einer Abmessung parallel zum Verlauf der Poren 55 von 100 µm für den Reaktionsraum 56 werden die Ätzparameter auf 10 mA/cm² für weitere 4 Stunden geändert. Die elektrochemische Ätzung wird mit diesen Parametern fortgesetzt, wobei die Poren 55 zwischen dem Reaktionsraum 56 und der zweiten Hauptfläche 54 gebildet werden. Nach Erreichen der zweiten Hauptfläche 54 wird die elektrochemische Ätzung beendet.

## Patentansprüche

1. Reaktoranordnung,
- bei der ein Gehäuse (11) und eine Siliziumscheibe (12) vorgesehen sind,
- bei der die Siliziumscheibe (12) monolithisch mit Teilen des Gehäuses (11) verbunden ist,
- bei der die Siliziumscheibe (12) Poren (13) aufweist, die sich von einer ersten Hauptfläche (14) der Siliziumscheibe (12) in das Innere der Siliziumscheibe (12) erstrecken,
- bei der die Poren (13) von der ersten Hauptfläche (14) zu einer zweiten Hauptfläche (15) der Siliziumscheibe (12) verlaufen,
- bei der in der Siliziumscheibe (52) ein Reaktionsraum (56) vorgesehen ist, von dem aus Poren (55) zu der ersten Hauptfläche (53) und der zweiten Hauptfläche (54) verlaufen,
- bei der eine Katalysatorschicht (16) vorgesehen ist, die die Oberfläche der Poren (13) mindestens teilweise bedeckt,
- bei der das Gehäuse (11) mit einer ersten Zuführung (17) versehen ist,
- bei der das Gehäuse (11) eine zweite Zuführung aufweist, die der zweiten Hauptfläche benachbart ist,
- bei der das Gehäuse (51) eine dritte Zuführung (510) aufweist, die der ersten Hauptfläche (53) benachbart ist und über die unabhängig von der ersten Zuführung (58) Reaktionsteilnehmer zuführbar sind.

2. Reaktoranordnung nach Anspruch 1,
bei der der Durchmesser der Poren (13) 1 *µ*m bis 10 *µ*m beträgt.

3. Reaktoranordnung nach Anspruch 1 oder 2,
bei der die Seitenwände der Poren (32) mit Seitenporen (34) versehen sind, wobei der Durchmesser der Seitenporen (34) mindestens um einen Faktor 10 geringer als der der Poren (32) ist.

4. Reaktoranordnung nach einem der Ansprüche 1 bis 3,
bei der zwischen der Oberfläche der Poren (22) und der Katalysatorschicht (25) eine inerte Schicht (24) vorgesehen ist.

5. Reaktoranordnung nach Anspruch 4,
bei der die inerte Schicht (24) mindestens eines der Materialien Siliziumnitrid, Siliziumoxid, Bornitrid, Metallsilizid enthält.

6. Reaktoranordnung nach einem der Ansprüche 1 bis 5,
bei der die Katalysatorschicht (16) mindestens einen der Stoffe Platin, Palladium, Gold, Protenium enthält.

7. Verfahren zur Herstellung einer Reaktoranordnung nach einem der Ansprüche 1 bis 6,
bei dem die Poren (13) in der Siliziumscheibe (12) durch elektrochemisches Ätzen in einem sauren, fluoridhaltigen Elektrolyten, gegen den die Siliziumscheibe (12) als Anode verschaltet ist, gebildet werden.

8. Verfahren nach Anspruch 7,
- bei dem bei der elektrochemischen Ätzung eine konstante Stromdichte eingestellt wird, bis die Poren (55) eine erste Tiefe erreicht haben,
- bei dem die Stromdichte nach Erreichen der ersten Tiefe erhöht wird, so daß der Durchmesser der Poren (55) zunimmt und benachbarte Poren (55) zur Bildung eines Reaktionsraumes (56) zusammenwachsen,
- bei dem nach Erreichen einer zweiten Tiefe die Stromdichte reduziert wird, so daß getrennte Poren (55) von der zweiten Tiefe bis zur zweiten Hauptfläche (54) wachsen.

9. Verfahren nach Anspruch 7 oder 8,
bei dem nach Bildung der Poren (32) die Parameter der elektrochemischen Ätzung so geändert werden, daß in den Seitenwänden der Poren (32) Seitenporen (34) mit einem Durchmesser, der mindestens um einen Faktor 10 geringer als der der Poren (32) ist, gebildet werden.

## Claims

1. Reactor arrangement
- in which a housing (11) and a silicon wafer (12) are provided,
- in which the silicon wafer (12) is monolithically connected to parts of the housing (11),
- in which the silicon wafer (12) has pores (13) extending from a first main area (14) of the silicon wafer (12) into the interior of the silicon wafer (12),
- in which the pores (13) run from the first main area (14) to a second main area (15) of the silicon wafer (12)
- in which a reaction space (56) is provided in the silicon wafer (52), pores (55) running from said reaction space to the first main area (53) and the second main area (54),
- in which a catalyst layer (16) is provided, which at least partly covers the surface of the pores (13),
- in which the housing (11) is provided with a first feed (17),
- in which the housing (11) has a second feed, which is adjacent to the second main area,
- in which the housing (51) has a third feed (510) which is adjacent to the first main area (53) and via which reactants can be fed in independently of the first feed (58).

2. Reactor arrangement according to Claim 1,
in which the diameter of the pores (13) is from 1 µm to 10 µm.

3. Reactor arrangement according to Claim 1 or 2,
in which the side walls of the pores (32) are provided with lateral pores (34), the diameter of the lateral pores (34) being at least a factor of 10 less than that of the pores (32).

4. Reactor arrangement according to one of Claims 1 to 3,
in which an inert layer (24) is provided between the surface of the pores (23) and the catalyst layer (25).

5. Reactor arrangement according to Claim 4,
in which the inert layer (24) contains at least one of the materials silicon nitride, silicon oxide, boron nitride, metal silicide.

6. Reactor arrangement according to one of Claims 1 to 5,
in which the catalyst layer (16) contains one of the substances platinum, palladium, gold, protenium [sic].

7. Method for producing a reactor arrangement according to one of Claims 1 to 6,
in which the pores (13) are formed in the silicon wafer (12) by means of electrochemical etching in an acidic, fluoride-containing electrolyte with respect to which the silicon wafer (12) is connected up as anode.

8. Method according to Claim 7,
- in which, in the course of the electrochemical etching, a constant current density is set until the pores (55) have reached a first depth,
- in which the current density is increased after the first depth has been reached, with the result that the diameter of the pores (55) increases and adjacent pores (55) grow together in order to form a reaction space (56),
- in which the current density is reduced after a second depth has been reached, with the result that separate pores (55) grow from the second depth as far as the second main area (54).

9. Method according to Claim 7 or 8,
in which, after the pores (32) have been formed, the electrochemical etching parameters are changed in such a way that lateral pores (34) having a diameter which is at least a factor of 10 less than that of the pores (32) are formed in the side walls of the pores (32).

## Revendications

1. Système de réacteur
- dans lequel il est prévu une enveloppe (11) et un disque (12) en silicium,
- dans lequel le disque (12) en silicium est relié monolithiquement à des parties de l'enveloppe (11),
- dans lequel le disque (12) en silicium a des pores (13) qui s'étendent d'une première surface (14) principale du disque (12) en silicium à l'intérieur du disque (12) en silicium,
- dans lequel les pores (13) vont de la première surface (14) principale à une seconde surface (15) principale du disque (12) en silicium,
- dans lequel il est prévu dans le disque (52) en silicium une chambre (56) de réaction, de laquelle des pores (55) vont vers la première surface (53) principale et la seconde surface (54) principale,
- dans lequel il est prévu une couche (16) de catalyseur qui revêt au moins partiellement la surface des pores (13),
- dans lequel l'enveloppe (11) est munie d'une première entrée (17),
- dans lequel l'enveloppe (11) comporte une deuxième entrée qui est voisine de la seconde surface principale,
- dans lequel l'enveloppe (51) comporte une troisième entrée (510) qui est voisine de la première surface (53) principale et par laquelle les produits participant à la réaction peuvent être amenés indépendamment de la première entrée (58).

2. Système de réacteur suivant la revendication 1,
dans lequel le diamètre des pores (13) est compris entre 1 µm et 10 µm.

3. Système de réacteur suivant la revendication 1 ou 2,
dans lequel les parois latérales des pores sont munies de pores (34) latéraux, le diamètre des pores latéraux étant plus petit au moins d'un facteur de 10 que celui des pores (32).

4. Système de réacteur suivant l'une des revendications 1 à 3,
dans lequel il est prévu entre la surface des pores (22) et la couche (25) de catalyseur une couche (24) inerte.

5. Système de réacteur suivant la revendication 5,
dans lequel la couche (24) inerte contient au moins l'un des matériaux nitrure de silicium, oxyde de silicium, nitrure de bore, siliciure de métal.

6. Système de réacteur suivant l'une des revendications 1 à 5,
dans lequel la couche (16) de catalyseur comprend au moins l'une des substances platine, palladium, or, proténium.

7. Procédé de fabrication d'un système de réacteur suivant l'une des revendications 1 à 6,
dans lequel les pores (13) du disque (12) en silicium sont formés par attaque électrochimique dans un électrolyte acide contenant du fluorure et en regard duquel le disque (12) en silicium est monté en anode.

8. Procédé suivant la revendication 7,
- dans lequel l'attaque électrochimique est réglée à une densité de courant constante jusqu'à ce que les pores (55) aient atteint une première profondeur,
- dans lequel la densité de courant est augmentée après avoir atteint la première profondeur, de sorte que le diamètre des pores (55) augmente et que des pores (55) voisins se réunissent pour former une chambre (56) de réaction,
- dans lequel, après avoir atteint une deuxième profondeur, la densité de courant est réduite, de sorte que des pores (55) séparés croissent de la deuxième profondeur jusqu'à la seconde surface (54) principale.

9. Procédé suivant la revendication 7 ou 8,
dans lequel, après la formation des pores (32), les paramètres de l'attaque électrochimique sont modifiés de façon à former dans les parois latérales des pores (32) des pores (34) latéraux ayant un diamètre qui est plus petit au moins d'un facteur de 10 que celui des pores (32).
